# EUROPÄISCHE PATENTANMELDUNG

(11) **EP 4 439 690 A1**
(43) Veröffentlichungstag der Anmeldung: **02.10.2024**
(21) Anmeldenummer: 24163701.6
(22) Anmeldetag: 15.03.2024
(51) Int. Cl.: H01M 4/04, H01M 4/139, H01M 4/36, B05C 1/08

(54) **BESCHICHTUNGSVORRICHTUNG, VERFAHREN UND ELEKTRODE**

(30) Priorität: 30.03.2023 DE 102023202928
(71) Anmelder: VOLKSWAGEN AG, 38440 Wolfsburg (DE)
(72) Erfinder: Bußwinkel, Ludger, 38106 Braunschweig (DE); Schopf, Dr. Sven, 38116 Braunschweig (DE); Reuber, Dr. Sebastian, 01099 Dresden (DE); Schmidt-Lobach, Roland, 39356 Hörsingen (DE)

(57) **Zusammenfassung**

Die Erfindung betrifft eine Beschichtungsvorrichtung (10) zur Herstellung einer Elektrode (11)
mit zumindest einer zweilagigen Pulverschicht (12) auf einem Substrat (15)
mit einer Zuführeinheit (17) zum Zuführen (110) eines Substrats (15) in einen ersten Anpressspalt (18),
mit einer ersten Walzeneinrichtung (19) zum Übertragen (140) eines ersten Pulvers (21) als eine erste Schicht (26) auf eine erste Seite (27) des Substrats (15),
wobei die erste Walzeneinrichtung (19) eine erste Dosiereinheit (20) eine erste Auftragswalze (23), eine erste Anpresswalzeneinheit (24) und eine zweite Anpresswalzeneinheit (25) aufweist,
wobei ein erster Dosierspalt (22) zwischen der ersten Auftragswalze (23) und der ersten Anpresswalzeneinheit (24) vorgesehen ist und wobei ein erster Anpressspalt (18) zwischen der ersten Anpresswalzeneinheit (24) und der zweiten Anpresswalzeneinheit (25) vorgesehen ist, mit einer zweiten Walzeneinrichtung (28) zum Übertragen (140) eines zweiten Pulvers (29) auf die erste Schicht (26) auf der ersten Seite (27) des Substrats (15),
wobei die zweite Walzeneinrichtung (28) der ersten Walzeneinrichtung (19) nachgelagert angeordnet ist, wobei die zweite Walzeneinrichtung (28) eine zweite Dosiereinheit (31), eine zweite Auftragswalze (33), eine dritte Anpresswalzeneinheit (34) und eine vierte Anpresswalzeneinheit (35) aufweist,
wobei ein zweiter Dosierspalt (32) zwischen der zweiten Auftragswalze (33) und der dritten Anpresswalzeneinheit (34) vorgesehen ist, und
wobei der zweite Anpressspalt (30) zwischen der dritten Anpresswalzeneinheit (34) und der vierten Anpresswalzeneinheit (35) vorgesehen ist.

## Beschreibung

Die Erfindung betrifft eine Beschichtungsvorrichtung zur Herstellung einer Elektrode mit zumindest einer zweilagigen Pulverschicht auf einem Substrat mit den Merkmalen des unabhängigen Patentanspruchs 1, ein Verfahren zur Herstellung einer Elektrode mit zumindest einer zweilagigen Pulverschicht, insbesondere einer zweilagigen Kathodenschicht und/oder Anodenschicht, auf einem Substrat, mit den Merkmalen des unabhängigen Patentanspruchs 6 sowie eine Elektrode mit den Merkmalen des unabhängigen Patentanspruchs 13.

Bei Versuchen zur lösemittelfreien bzw. trockenen Elektrodenherstellung wurden bisher Elektroden mit einer einlagigen Beschichtung hergestellt. Um die Performance von Batteriezellen zu verbessern, wird bei der konventionellen Elektrodenherstellung der Ansatz verfolgt, Elektroden mit mehrlagigen Beschichtungen (unterschiedliche Zusammensetzung der einzelnen Schichten) herzustellen. Da diese eine erhöhte Energiedichte und elektrische Leitfähigkeit aufweisen.

Derzeit werden lösungsmittelfrei hergestellte Elektroden mit einer mehrlagigen Beschichtung oftmals als ein frei stehender Film erzeugt. Dabei werden zwei Pulver in einem Kalanderspalt an einen Stromsammler gepresst.

Allerdings wird weiterhin standardmäßig die Elektrode nass prozessiert und enthält somit Lösungsmittel.

Eine weitere Methode ist das nacheinander Auftragen einzelner Schichten als frei stehender Film auf die dafür vorgesehenen Seiten eines Substrats. Hierfür können beispielsweise in zwei nacheinander angeordneten Kalanderspalten jeweils die einzelnen Schichten aufgetragen und angepresst werden.

Allerdings werden hierbei oft Haftvermittler oder eine gewisse Feuchtigkeit des Pulvers benötigt, da sonst ein Haften der jeweiligen Schichten nicht gewährleistet werden kann. Dies kann zu einem nicht durchgehend beschichteten Substrat bzw. Stromsammler führen. Dies wiederum führt zu einem erhöhten Ausschuss oder einer geringeren elektrischen Leistung einer derart hergestellten Elektrode.

Es ist daher eine Aufgabe der vorliegenden Erfindung, wenigstens einen der voranstehend beschriebenen Nachteile zumindest teilweise zu überwinden. Insbesondere ist es Aufgabe der Erfindung, eine Beschichtungsvorrichtung zur Verfügung zu stellen, welche eine trockene Elektrodenherstellung ermöglicht, sodass die elektrische Leitfähigkeit bzw. die Energiedichte der Elektrode erhöht wird. Weiterhin ist es Aufgabe der Erfindung, ein Verfahren zur trockenen Elektrodenherstellung und eine derartig hergestellte Elektrode zur Verfügung zu stellen.

Die voranstehende Aufgabe wird gelöst durch eine Beschichtungsvorrichtung mit den Merkmalen des unabhängigen Patentanspruchs 1, durch ein Verfahren mit den Merkmalen des unabhängigen Patentanspruchs 6 sowie durch eine Elektrode mit den Merkmalen des unabhängigen Patentanspruchs 13. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Beschichtungsvorrichtung beschrieben sind, selbstverständlich auch im Zusammenhang mit dem erfindungsgemäßen Verfahren und/oder im Zusammenhang mit der erfindungsgemäßen Elektrode und jeweils umgekehrt, sodass bezüglich der Offenbarung zu den einzelnen Erfindungsaspekten stets wechselseitig Bezug genommen wird bzw. werden kann.

Erfindungsgemäß vorgesehen ist gemäß einem ersten Aspekt der Erfindung eine Beschichtungsvorrichtung zur Herstellung einer Elektrode mit zumindest einer zweilagigen Pulverschicht, insbesondere einer zweilagigen Kathodenschicht und/oder Anodenschicht, auf einem Substrat, insbesondere einen Stromsammler, mit einer Zuführeinheit zum Zuführen eines Substrats in einen ersten Anpressspalt mit einer ersten Walzeneinrichtung zum Übertragen eines ersten Pulvers als eine erste Schicht auf eine erste Seite des Substrats und mit einer zweiten Walzeneinrichtung zum Übertragen eines zweiten Pulvers als eine zweite Schicht auf die erste Schicht auf der ersten Seite des Substrats.

Dabei weist die erste Walzeneinrichtung eine erste Dosiereinheit zur Aufnahme eines ersten Pulvers und zum Befüllen eines ersten Dosierspalts mit dem ersten Pulver auf. Zusätzlich weist die erste Walzeneinrichtung eine erste Auftragswalze, eine erste Anpresswalzeneinheit und eine zweite Anpresswalzeneinheit auf, wobei der erste Dosierspalt zwischen der ersten Auftragswalze und der ersten Anpresswalzeneinheit vorgesehen ist und wobei der erste Anpressspalt zwischen der ersten Anpresswalzeneinheit und der zweiten Anpresswalzeneinheit vorgesehen ist. Der erste Dosierspalt ist dabei zum Auftragen des ersten Pulvers als eine erste Schicht auf die erste Anpresswalzeneinheit mittels einer ersten Auftragskraft vorgesehen und der erste Anpressspalt ist zum Übertragen der ersten Schicht von der ersten Anpresswalzeneinheit auf eine erste Seite des Substrats mittels einer ersten Anpresskraft vorgesehen.

Die zweite Walzeneinrichtung ist der ersten Walzeneinrichtung nachgelagert angeordnet, wobei die erste Walzeneinrichtung ausgelegt ist, das auf der ersten Seite beschichtete Substrat einem zweiten Anpressspalt der zweiten Walzeneinrichtung zuzuführen.

Dabei weist die zweite Walzeneinrichtung eine zweite Dosiereinheit zur Aufnahme eines zweiten Pulvers und zum Befüllen eines zweiten Dosierspalts mit dem zweiten Pulver auf. Dabei weist die zweite Walzeneinrichtung eine zweite Auftragswalze, eine dritte Anpresswalzeneinheit und eine vierte Anpresswalzeneinheit auf, wobei der zweite Dosierspalt zwischen der zweiten Auftragswalze und der dritten Anpresswalzeneinheit vorgesehen ist, und wobei der zweite Anpressspalt zwischen der dritten Anpresswalzeneinheit und der vierten Anpresswalzeneinheit vorgesehen ist. Dabei ist der zweite Dosierspalt zum Auftragen des zweiten Pulvers als eine zweite Schicht auf die dritte Anpresswalzeneinheit mittels einer zweiten Auftragskraft vorgesehen und der zweite Anpressspalt ist zum Übertragen der zweiten Schicht von der dritten Anpresswalzeneinheit auf die erste Schicht der ersten Seite des zugeführten Substrats mittels einer zweiten Anpresskraft vorgesehen.

Die Beschichtungsvorrichtung basiert auf einer walzengetragenen Beschichtung, bei der zunächst das erste Pulver als erste Schicht auf eine Walze der ersten Anpresswalzeneinheit aufgetragen wird, um dann von einer oder der Walze auf das Substrat übertragen bzw. angepresst zu werden. Anschließend erfolgt eine weitere walzengetragene Beschichtung, bei der das zweite Pulver als zweite Schicht auf eine Walze der dritten Anpresswalzeneinheit aufgetragen wird, um dann von dieser oder einer anderen Walze auf die erste Schicht übertragen zu werden. Dies ist besonders vorteilhaft für das Beschichten eines Substrats mit einem lösungsmittelfreien und trockenen Pulvermaterial, sodass sich die Beschichtungsvorrichtung hervorragend für die trockene Elektrodenherstellung eignet.

Ferner können die erste Auftragswalze der ersten Walzeneinrichtung und die zweite Auftragswalze der zweiten Walzeneinrichtung eine geringere Rotationsgeschwindigkeit aufweisen als die jeweils mit ihnen den Dosierspalt bildende Anpresswalze der ersten Anpresswalzeneinheit respektive der dritten Anpresswalzeneinheit. Dies stellt sicher, dass das erste Pulver als erste Schicht an der ersten Anpresswalzeneinheit und das zweite Pulver als zweite Schicht an der dritten Anpresswalzeneinheit haften bleibt. Dabei kommt es bei dem Auftragen der Pulver auf die jeweilige Auftragswalze zu einer Scherung des jeweiligen Pulvers in dem Dosierspalt. Die Auftragskräfte können somit Scherkräfte sein, sodass die Auftragswalzen auch als Scherwalzen bezeichnet werden können.

Die erste Anpresswalzeneinheit und die zweite Anpresswalzeneinheit können jeweils eine Anpresswalze aufweisen. Zum Aufbringen der Anpresskraft für den Übertrag der ersten Schicht rotieren die Anpressspalt bildenden Anpresswalzen der ersten und zweiten Anpresswalzeneinheit mit der gleichen Rotationsgeschwindigkeit gegeneinander, um ein optimales Beschichtungsergebnis zu liefern. Die erste Auftragswalze kann eine geringere Rotationsgeschwindigkeit aufweisen als die mit ihr den Dosierspalt bildende Anpresswalze der ersten Anpresswalzeneinheit, dadurch wird sichergestellt, dass das erste Pulver und das zweite Pulver als erste Schicht auf der ersten Anpresseinheit haften bleiben, um von dieser getragen zu werden. Gleiches gilt für die dritte und vierte Anpresswalzeneinheit der zweiten Walzeneinrichtung. Auch diese können jeweils eine Anpresswalze aufweisen, welche zum Aufbringen der Presskraft für den Übertrag der zweiten Schicht auf die erste Schicht mit der gleichen Rotationsgeschwindigkeit gegeneinander rotieren.

Dabei sind die Rotationsgeschwindigkeiten der ersten und zweiten Anpresswalzeneinheit so an die Rotationsgeschwindigkeit der dritten und vierten Anpresswalzeneinheit angepasst, dass die Scherkräfte auf die bereits aufgetragene erste Schicht im zweiten Anpressspalt so gering wie möglich sind, um die Beschichtung nicht zu zerstören.

Das nacheinander Auftragen der einzelnen Schichten der zweilagigen Pulverschicht führt zu einer verringerten Grenzschicht zwischen dem ersten Pulver und dem zweiten Pulver, also der ersten Schicht und der zweiten Schicht, der ersten zweilagigen Pulverschicht, da es nicht zu einem Vermischen des ersten und des zweiten Pulvers kommt.

Im Rahmen der Erfindung kann es von Vorteil sein, dass die erste Walzeneinrichtung eine dritte Dosiereinheit zur Aufnahme eines dritten Pulvers und zum Befüllen eines dritten Dosierspalts mit dem dritten Pulver aufweist und dass die erste Walzeneinrichtung eine dritte Auftragswalze aufweist, wobei der dritte Dosierspalt zwischen der dritten Auftragswalze und der zweiten Anpresswalzeneinheit vorgesehen ist, wobei der dritte Dosierspalt zum Auftragen des dritten Pulvers als dritte Schicht auf die dritte Anpresswalzeneinheit mittels einer dritten Auftragskraft vorgesehen ist. Der erste Anpressspalt ist zum Übertragen der dritten Schicht von der zweiten Anpresswalzeneinheit auf eine zweite Seite des Substrats mittels der ersten Anpresskraft vorgesehen.

Dies ermöglicht ein paralleles Aufbringen der ersten Schicht auf der ersten Seite des Substrats und der dritten Schicht auf der zweiten Seite des Substrats mittels der ersten Anpresskraft im ersten Anpressspalt.

Im Rahmen der Erfindung ist es denkbar, dass die zweite Walzeneinrichtung eine vierte Dosiereinheit zur Aufnahme eines vierten Pulvers und zum Befüllen eines vierten Dosierspalts mit dem vierten Pulver aufweist und dass die zweite Walzeneinrichtung eine vierte Auftragswalze aufweist, wobei der vierte Dosierspalt zwischen der vierten Auftragswalze und der vierten Anpresswalzeneinheit vorgesehen ist, wobei der vierte Dosierspalt zum Auftragen des vierten Pulvers als eine vierte Schicht auf die vierte Anpresswalzeneinheit mittels einer vierten Auftragskraft vorgesehen ist und wobei der zweite Anpressspalt zum Übertragen der vierten Schicht von der vierten Anpresswalzeneinheit auf die dritte Schicht der zweiten Seite des Substrats mittels der zweiten Anpresskraft vorgesehen ist.

Dies ermöglicht ein paralleles Aufbringen der zweiten Schicht auf die erste Schicht des Substrats und der vierten Schicht auf die dritte Schicht des Substrats mittels der zweiten Anpresskraft im zweiten Anpressspalt.

Dabei gelten die Eigenschaften und Merkmale der Beschichtungsvorrichtung, die im Zusammenhang mit einer ersten und zweiten Auftragswalze genannt wurden, analog für die Eigenschaften und Merkmale im Zusammenhang mit der dritten und vierten Auftragswalze.

Ferner können die dritte Auftragswalze der ersten Walzeneinrichtung und die vierte Auftragswalze der zweiten Walzeneinrichtung eine geringere Rotationsgeschwindigkeit aufweisen als die jeweils mit ihnen den Dosierspalt bildende Anpresswalze der zweiten Anpresswalzeneinheit respektive der vierten Anpresswalzeneinheit. Dies stellt sicher, dass das dritte Pulver als dritte Schicht an der zweiten Anpresswalzeneinheit und das vierte Pulver als vierte Schicht an der vierten Anpresswalzeneinheit haften bleibt.

Es kann im Rahmen der Erfindung vorgesehen sein, dass die erste Anpresswalzeneinheit der ersten Walzeneinrichtung mindestens eine erste Anpresswalze und mindestens eine zweite Anpresswalze aufweist, wobei zwischen der mindestens einen ersten Anpresswalze und der mindestens einen zweiten Anpresswalze mindestens ein erster Verpressspalt vorgesehen ist. Zusätzlich oder alternativ, weist die zweite Anpresswalzeneinheit der ersten Walzeneinrichtung mindestens eine dritte Anpresswalze und mindestens eine vierte Anpresswalze auf, wobei zwischen der mindestens einen dritten Anpresswalze und der mindestens einen vierten Anpresswalze mindestens ein zweiter Verpressspalt vorgesehen ist. Zusätzlich oder alternativ, weist die dritte Anpresswalzeneinheit der zweiten Walzeneinrichtung mindestens eine fünfte Anpresswalze und mindestens eine sechste Anpresswalze auf, wobei zwischen der mindestens einen fünften Anpresswalze und der mindestens einen sechsten Anpresswalze mindestens ein dritter Verpressspalt vorgesehen ist. Zusätzlich oder alternativ, weist die vierte Anpresswalzeneinheit der zweiten Walzeneinrichtung mindestens eine siebente Anpresswalze und mindestens eine achte Anpresswalze auf, wobei zwischen der mindestens einen siebenten Anpresswalze und der mindestens einen achten Anpresswalze mindestens ein vierter Verpressspalt vorgesehen ist.

Der erste Verpressspalt und/oder der zweite Verpressspalt und/oder dritte Verpressspalt und/oder der vierte Verpressspalt verpressen die erste Schicht bzw. die zweite Schicht bzw. die dritte Schicht bzw. die vierte Schicht, bevor diese auf das Substrat übertragen wird. Dadurch kann eine dichtere Packung der ersten zweilagigen Pulverschicht erzeugt werden, wobei die erste zweilagige Pulverschicht die erste Schicht und die zweite Schicht aufweist. Gleichzeitig kann auch eine dichtere Packung der zweiten zweilagigen Pulverschicht erzeugt werden, wobei die zweite zweilagige Pulverschicht die dritte Schicht und die vierte Schicht aufweist. Dies wiederum kann die elektrische Leitfähigkeit weiter verbessern. Ferner hat ein Verpressspalt den zusätzlichen Effekt, dass sowohl in dem Dosierspalt als auch in dem Anpressspalt geringere Kräfte zum Auftragen bzw. Übertragen wirken müssen, sodass die in den Spalten wirkenden Scherkräfte reduziert werden können. Dies erzeugt einen gleichmäßigen Auftrag und Übertrag und reduziert die Fehlerstellen beim Auftrag bzw. Übertrag.

Es ist ferner denkbar, dass im Bereich des ersten Dosierspalts ein erstes Abschirmblech im Bereich der ersten Auftragswalze vorgesehen ist und/oder dass ein zweites Abschirmblech im Bereich der ersten Anpresswalzeneinheit vorgesehen ist. Zusätzlich oder alternativ ist es denkbar, dass im Bereich des zweiten Dosierspalts ein drittes Abschirmblech im Bereich der zweiten Auftragswalze vorgesehen ist und/oder dass ein viertes Abschirmblech im Bereich der dritten Anpresswalzeneinheit vorgesehen ist. Zusätzlich oder alternativ ist es denkbar, dass im Bereich des dritten Dosierspalts ein fünftes Abschirmblech im Bereich der dritten Auftragswalze vorgesehen ist und/oder dass ein sechstes Abschirmblech im Bereich der zweiten Anpresswalzeneinheit vorgesehen ist. Zusätzlich oder alternativ ist es denkbar, dass im Bereich des vierten Dosierspalts ein siebentes Abschirmblech im Bereich der vierten Auftragswalze vorgesehen ist und/oder dass ein achtes Abschirmblech im Bereich der vierten Anpresswalzeneinheit vorgesehen ist.

Die Abschirmbleche dienen dazu, dass sich das Pulver nicht schon vor dem Dosierspalt an die jeweilige Anpresswalzeneinheit anlegt oder an der der jeweiligen Anpresswalzeneinheit zugeordneten Auftragswalze anhaftet. Gleichzeitig lässt sich durch derartige Abschirmbleche der Pulvereinzug in den ersten Dosierspalt und/oder zweiten Dosierspalt auf einfache Art und Weise steuern. Gleichzeitig ist es denkbar, dass die Abschirmbleche eine Struktur aufweisen, um die jeweilige Auftragswalze und/oder die jeweilige Anpresswalzeneinheit zu reinigen bzw. von anhafteten Materialien zu befreien. Dies ermöglicht einen möglichst sauberen Auftrag einer neuen ersten und/oder zweiten und/oder dritten und/oder vierten Schicht bzw. einen sauberen Übertrag der ersten und/oder zweiten Schicht auf das Substrat bzw. der dritten Schicht auf die erste Schicht und/oder die vierte Schicht auf die zweite Schicht.

Weiterhin ist es bei der Beschichtungsvorrichtung denkbar, dass die erste Auftragswalze und/oder die zweite Auftragswalze und/oder die dritte Auftragswalze und/oder die vierte Auftragswalze und/oder die erste Anpresswalzeneinheit und/oder die zweite Anpresswalzeneinheit und/oder die dritte Anpresswalzeneinheit und/oder die vierte Anpresswalzeneinheit temperierbar sind.

Dies kann das Auftragen und Übertragen der diversen Pulver bzw. Schichten auf die Walzen bzw. das Substrat erheblich vereinfachen, da die Haftung an den Oberflächen an die aufzubringenden Materialien anpassbar ist.

Die obenstehende Aufgabe wird gemäß einem zweiten Aspekt der Erfindung ferner gelöst durch ein erfindungsgemäßes Verfahren zur Herstellung einer Elektrode mit zumindest einer zweilagigen Pulverschicht, insbesondere einer zweilagigen Kathodenschicht und/oder Anodenschicht, auf einem Substrat, insbesondere einen Stromsammler, in einer Beschichtungsvorrichtung gemäß einem der vorhergehenden Ansprüche aufweisend die folgenden Schritte:
- Zuführen eines Substrats mittels der Zuführeinheit in den ersten Anpressspalt der ersten Walzeneinrichtung;
- Befüllen des ersten Dosierspalts mit dem ersten Pulver mittels der ersten Dosiereinheit;
- Auftragen des ersten Pulvers als erste Schicht auf die erste Anpresswalzeneinheit in dem ersten Dosierspalt mittels der ersten Auftragskraft;
- Übertragen der ersten Schicht auf die erste Seite des Substrats in dem ersten Anpressspalt mittels der ersten Anpresskraft,
- Zuführen des Substrats mit der übertragenen ersten Schicht in den zweiten Anpressspalt der zweiten Walzeneinrichtung,
- Befüllen des zweiten Dosierspalts mit dem zweiten Pulver mittels der zweiten Dosiereinheit;
- Auftragen des zweiten Pulvers als zweite Schicht auf die dritte Anpresswalzeneinheit in dem zweiten Dosierspalt mittels der zweiten Auftragskraft;
- Übertragen der zweiten Schicht auf die erste Schicht der ersten Seite des Substrats in dem zweiten Anpressspalt mittels der zweiten Anpresskraft.

Das nacheinander Auftragen der ersten Schicht und der zweiten Schicht führt dazu, dass die erste Schicht eine zusätzliche Verdichtung erhält, dies wirkt sich vorteilhaft auf die elektrische Leitfähigkeit und die Energiedichte der damit herstellbaren Elektrode aus.

Auch ist bei dem Verfahren denkbar, dass die dritte Dosiereinheit den dritten Dosierspalt mit dem dritten Pulver befüllt, wobei das dritte Pulver in dem dritten Dosierspalt mittels der dritten Auftragskraft als dritte Schicht auf die zweite Anpresswalzeneinheit aufgetragen wird und dass die dritte Schicht in dem ersten Anpressspalt mittels der ersten Anpresskraft auf die zweite Seite des Substrats übertragen wird.

Mittels der dritten Dosiereinheit und der dritten Auftragswalze ist es möglich, gleichzeitig zum Übertragen der ersten Schicht auf die erste Seite des Substrats die dritte Schicht auf die zweite Seite des Substrats zu übertragen. Dies spart Zeit und ist effizient.

Im Rahmen der Erfindung ist es optional möglich, dass die vierte Dosiereinheit den vierten Dosierspalt mit dem vierten Pulver befüllt, wobei das vierte Pulver in dem vierten Dosierspalt mittels der vierten Auftragskraft als vierte Schicht auf die vierte Anpresswalzeneinheit aufgetragen wird und dass die vierte Schicht in dem zweiten Anpressspalt mittels der zweiten Anpresskraft auf die dritte Schicht der zweiten Seite des Substrats übertragen wird.

Mittels der vierten Dosiereinheit und der vierten Auftragswalze ist es möglich, gleichzeitig zum Übertragen der zweiten Schicht auf die erste Schicht der ersten Seite des Substrats die vierte Schicht auf die dritte Schicht der zweiten Seite des Substrats zu übertragen. Dies spart Zeit und ist effizient.

Ferner kann es im Rahmen der Erfindung vorgesehen sein, dass die erste Dosiereinheit den ersten Dosierspalt kontinuierlich befüllt und/oder dass die zweite Dosiereinheit den zweiten Dosierspalt kontinuierlich befüllt und/oder dass die dritte Dosiereinheit den dritte Dosierspalt kontinuierlich befüllt und/oder dass die vierte Dosiereinheit den vierten Dosierspalt kontinuierlich befüllt.

Dies führt zu einem besonders gleichmäßigen Ergebnis bei der Erzeugung der jeweiligen Schichten auf den Anpresswalzeneinheiten und zum Übertrag von den Anpresswalzeneinheiten auf das Substrat bzw. die bereits auf das Substrat aufgebrachten Schichten.

In Bezug auf die vorliegende Erfindung ist es vorstellbar, dass die erste Schicht in dem mindestens einen ersten Verpressspalt der ersten Anpresswalzeneinheit der ersten Walzeneinrichtung verpresst wird. Zusätzlich oder alternativ ist es denkbar, dass die dritte Schicht in dem mindestens einen zweiten Verpressspalt der zweiten Anpresswalzeneinheit der ersten Walzeneinrichtung verpresst wird. Zusätzlich oder alternativ ist es denkbar, dass die zweite Schicht in dem mindestens einen dritten Verpressspalt der dritten Anpresswalzeneinheit der zweiten Walzeneinrichtung verpresst wird. Zusätzlich oder alternativ ist es denkbar, dass die vierte Schicht in dem mindestens einen vierten Verpressspalt der vierten Anpresswalzeneinheit der zweiten Walzeneinrichtung verpresst wird.

Das Verpressen in dem jeweiligen Verpressspalt führt zu einer Verdichtung der ersten Schicht und/oder zweiten Schicht und/oder der dritten Schicht und/oder der vierten Schicht, um eine dichtere Packung der jeweiligen zumindest zweilagigen Pulverschicht auf der ersten und/oder zweiten Seite des Substrats zu erzeugen. Dies ermöglicht eine Reduktion der ersten Auftragskraft und/oder der zweiten Auftragskraft und/oder der dritten Auftragskraft und/oder der vierten Auftragskraft und/oder der ersten Anpresskraft und/oder der zweiten Anpresskraft.

Ferner ist es vorstellbar, dass die erste Auftragswalze und/oder die zweite Auftragswalze und/oder dritte Auftragswalze und/oder die vierte Auftragswalze und/oder die erste Anpresswalzeneinheit und/oder die zweite Anpresswalzeneinheit und/oder die dritte Anpresswalzeneinheit und/oder die vierte Anpresswalzeneinheit auf eine Temperatur zwischen 80°C bis 150°C, insbesondere 100°C bis 120°C, temperiert werden.

Dies ermöglicht einen verbesserten Auftrag des ersten und zweiten Pulvers als erste Schicht auf die erste Anpresswalzeneinheit und/oder des dritten und vierten Pulvers als zweite Schicht auf die zweite Anpresswalzeneinheit. Des Weiteren kann die Temperierung der einzelnen Walzen den Übertrag der ersten Schicht auf die erste Seite des Substrats und/oder der dritten Schicht auf die zweite Seite des Substrats und/oder der zweiten Schicht auf die erste Schicht der ersten Seite des Substrats und/oder der vierten Schicht auf die dritte Schicht auf der zweiten Seite des Substrats verbessert werden, da die einzelnen Verbindungen der einzelnen Pulver der jeweiligen Schichten durch die Wärme erhöht werden.

Denkbar ist dabei auch, dass die Zuführeinheit temperiert wird, um das Substrat für den Übertrag, also das Anpressen, der ersten Schicht auf die erste Seite des Substrats und/oder dritten Schicht auf die zweite Seite des Substrats vorzuwärmen.

Im Rahmen der Erfindung kann es von Vorteil sein, dass die erste Anpresswalzeneinheit und die zweite Anpresswalzeneinheit der ersten Walzeneinrichtung mit der gleichen ersten Rotationsgeschwindigkeit gegeneinander rotieren, wobei das Verhältnis der ersten Rotationsgeschwindigkeit der ersten Anpresswalzeneinheit zu der zweiten Rotationsgeschwindigkeit der ersten Auftragswalze 10:1 bis 10:4, vorzugsweise 10:1,5 bis 10:3, weiter vorzugsweise 10:2 bis 10:3, ist und/oder das Verhältnis der ersten Rotationsgeschwindigkeit der zweiten Anpresswalzeneinheit zu der fünften Rotationsgeschwindigkeit dritten Auftragswalze 10:1 bis 10:4, vorzugsweise 10:1,5 bis 10:3, weiter vorzugsweise 10:2 bis 10:3,ist. Zusätzlich oder alternativ ist es denkbar, dass die dritte Anpresswalzeneinheit und die vierte Anpresswalzeneinheit der zweiten Walzeneinrichtung mit der gleichen dritten Rotationsgeschwindigkeit gegeneinander rotieren, wobei das Verhältnis der dritten Rotationsgeschwindigkeit der dritten Anpresswalzeneinheit zu der vierten Rotationsgeschwindigkeit der zweiten Auftragswalze 10:1 bis 10:4, vorzugsweise 10:1,5 bis 10:3, weiter vorzugsweise 10:2 bis 10:3,ist und/oder das Verhältnis der dritten Rotationsgeschwindigkeit der vierten Anpresswalzeneinheit zu der sechsten Rotationsgeschwindigkeit der vierten Auftragswalze 10:1 bis 10:4, vorzugsweise 10:1,5 bis 10:3, weiter vorzugsweise 10:2 bis 10:3,ist.

Weist die erste Anpresswalzeneinheit der ersten Walzeneinrichtung die erste und zweite Anpresswalze und/oder die zweite Anpresswalzeneinheit der ersten Walzeneinrichtung die dritte und vierte Anpresswalze auf, dann gilt die erste Rotationsgeschwindigkeit als Rotationsgeschwindigkeit der ersten Anpresswalze der ersten Anpresswalzeneinheit und der dritten Anpresswalze der zweiten Anpresswalzeneinheit, da diese den ersten Anpressspalt bilden. Dabei können die zweite Anpresswalze und die vierte Anpresswalze jeweils eine von der ersten Rotationsgeschwindigkeit abweichende Rotationsgeschwindigkeit aufweisen. Beispielsweise kann das Verhältnis der ersten Rotationsgeschwindigkeit der ersten und dritten Anpresswalze zu der Rotationsgeschwindigkeit der zweiten und/oder vierten Anpresswalze 10:5 bis 10:8, vorzugsweise 10:6 bis 10:8, weiter vorzugsweise 10:7 bis 10:8, sein.

Weist die dritte Anpresswalzeneinheit der zweiten Walzeneinrichtung die fünfte und die sechste Anpresswalze und/oder die vierte Anpresswalzeneinheit der zweiten Walzeneinrichtung die siebente und achte Anpresswalzeneinheit auf, dann gilt die dritte Rotationsgeschwindigkeit als die Rotationsgeschwindigkeit der fünften und siebenten Anpresswalze, da diese den zweiten Anpressspalt bilden. Auch hier können die sechste und die achte Anpresswalze jeweils eine von der dritten Rotationsgeschwindigkeit abweichende Rotationsgeschwindigkeit aufweisen. Beispielsweise kann das Verhältnis der dritten Rotationsgeschwindigkeit der fünften und siebenten Anpresswalze zu der Rotationsgeschwindigkeit der sechsten und/oder der achten Anpresswalze 10:5 bis 10:8, vorzugsweise 10:6 bis 10:8, weiter vorzugsweise 10:7 bis 10:8, sein.

Dabei hat sich in vorteilhafterweise herausgestellt, dass die Verhältnisse der Rotationsgeschwindigkeiten zu einer erhöhten Stabilität der ersten Schicht bzw. der ersten zumindest zweilagigen Pulverschicht auf dem Stromsammler der Elektrode und/oder der zweiten Schicht bzw. der zweiten zumindest zweilagigen Pulverschicht auf dem Stromsammler der Elektrode führt.

Die obenstehende Aufgabe wird gemäß einem dritten Aspekt der Erfindung ferner gelöst durch eine erfindungsgemäße Elektrode mit einer zweilagigen Pulverschicht hergestellt mit einer oben beschriebenen Beschichtungsvorrichtung und/oder einem oben beschriebenen Verfahren, wobei das Substrat ein Stromsammler mit einer ersten Seite und einer zweiten Seite ist, wobei die erste Schicht der zweilagigen Pulverschicht aus dem ersten Pulver und die zweite Schicht der zweilagigen Pulverschicht aus dem zweiten Pulver ist.

Im Rahmen der Erfindung ist es denkbar, dass die dritte Schicht der zweilagigen Pulverschicht aus dem dritten Pulver und die vierte Schicht der zweilagigen Pulverschicht aus dem vierten Pulver ist.

Die Elektrode kann dabei als Anode, aber auch als Kathode verwendet werden. Hierbei ist es denkbar, dass sich die zweilagige Pulverschicht der Kathode von der zweilagigen Pulverschicht der Anode unterscheidet. Denkbar ist es auch, dass sich der Stromsammler der Anode von dem Stromsammler der Kathode unterscheidet.

Eine derartige Elektrode weist eine optimal verdichtete zweilagige Pulverschicht auf, wobei die zweilagige Pulverschicht lösemittelfrei ist. Gleichzeitig weist eine derart hergestellte Elektrode eine hohe elektrische Leitfähigkeit und Energiedichte auf.

Ein besonders gutes Verhältnis aus Materialeinsatz des ersten, zweiten, dritten und vierten Pulvers für die zweilagige Pulverschicht zu der vorhandenen elektrischen Leitfähigkeit ergibt sich, wenn die zweilagige Pulverschicht eine Schichtdicke zwischen 40 bis 150 µm aufweisen, wobei das erste Pulver der ersten Schicht und das dritte Pulver der dritten Schicht eine Schichtdicke von 10 bis 70 µm aufweisen. Dadurch kann der Materialeinsatz auch kosteneffizient gestaltet werden.

Vorteile, die zu der Beschichtungsvorrichtung gemäß dem ersten Aspekt der Erfindung ausführlich beschrieben worden sind, gelten gleichermaßen auch für das Verfahren gemäß dem zweiten Aspekt der Erfindung sowie für eine Elektrode gemäß dem dritten Aspekt der Erfindung.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei ist die Erfindung in den folgenden Figuren gezeigt:
Figur 1 eine schematische Darstellung einer Beschichtungsvorrichtung zum Auftragen und Übertragen einer ersten zweilagigen Pulverschicht;
Figur 2 eine schematische Darstellung einer Beschichtungsvorrichtung zum Auftragen und Übertragen einer ersten und einer zweiten zweilagigen Pulverschicht;
Figur 3 ein Ausschnitt eines ersten Dosierspalts aus Fig.1;
Figur 4 eine schematische Darstellung eines Verfahrens mit einer Beschichtungsvorrichtung gemäß Fig. 1;
Figur 5 eine schematische Darstellung eines Verfahrens mit einer Beschichtungsvorrichtung gemäß Fig. 2;
Figur 6 eine schematische Darstellung einer Elektrode.

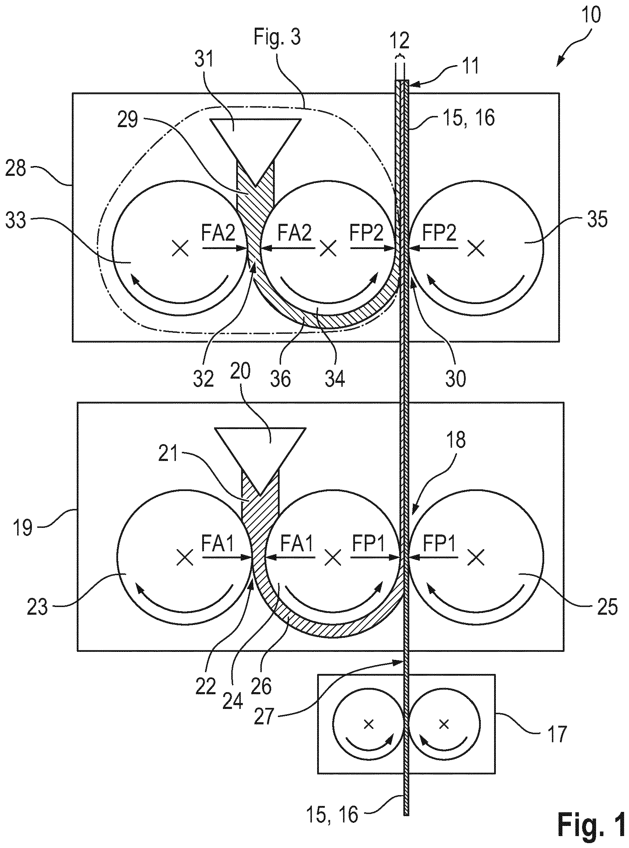

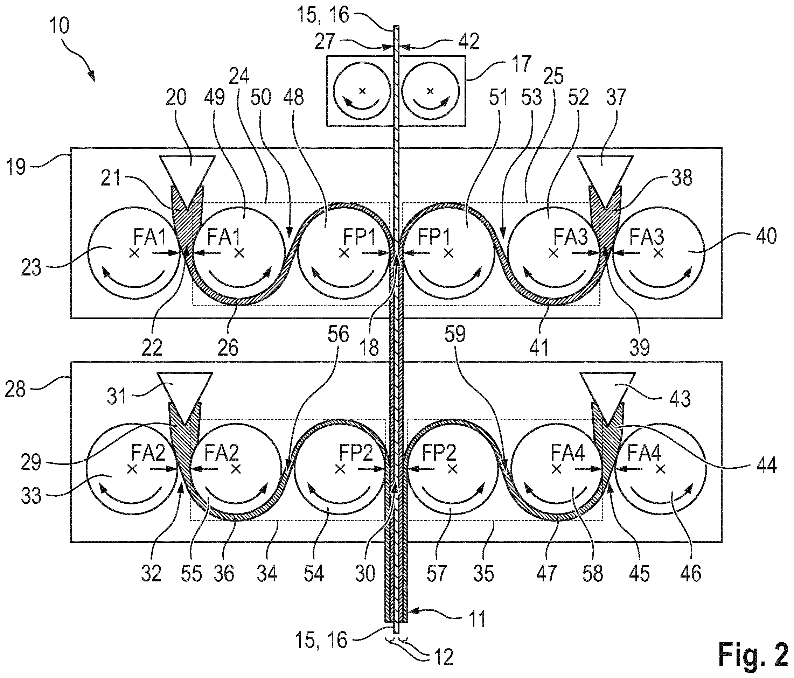

In Fig. 1 und Fig. 2 ist jeweils eine Beschichtungsvorrichtung 10 zur Herstellung einer Elektrode 11 mit zumindest einer zweilagigen Pulverschicht 12, insbesondere einer zweilagigen Kathodenschicht 13 und/oder Anodenschicht 14, auf einem Substrat 15, insbesondere einen Stromsammler 16, gezeigt. Dabei zeigt Fig. 1 eine Beschichtungsvorrichtung 10 zum einseitigen Beschichten eines Substrats 15 durch Auftragen 130 und Übertragen 140 der zumindest einen ersten zweilagigen Pulverschicht 12 und Fig. 2 eine Beschichtungsvorrichtung 10 zum beidseitigen Beschichten eines Substrats 15 durch Auftragen 130, 180 und Übertragen 140, 190 der zumindest einen ersten zweilagigen Pulverschicht 12 - ersten und zweiten Schicht 26, 34 - und der zumindest einen zweiten zweilagigen Pulverschicht 12 - dritten und vierten Schicht 41, 47.

Die Beschichtungsvorrichtung 10 sowohl der Fig. 1 als auch der Fig. 2 weist eine Zuführeinheit 17 zum Zuführen 110 eines Substrats 15 in einen ersten Anpressspalt 18, eine erste Walzeneinrichtung 19 zum Übertragen 140 eines ersten Pulvers 21 als eine erste Schicht 26 auf eine erste Seite 27 des Substrats 15 und eine zweite Walzeneinrichtung 28 zum Übertragen 140 eines zweiten Pulvers 29 auf die erste Schicht 26 auf der ersten Seite 27 des Substrats 15 auf.

Dabei weist die erste Walzeneinrichtung 19 eine erste Dosiereinheit 20 zur Aufnahme eines ersten Pulvers 21 und zum Befüllen eines ersten Dosierspalts 22 mit dem ersten Pulver 21 auf. Ferner sieht die erste Walzeneinrichtung 19 eine erste Auftragswalze 23, eine erste Anpresswalzeneinheit 24 und eine zweite Anpresswalzeneinheit 25 vor. Dabei ist der erste Dosierspalt 22 zwischen der ersten Auftragswalze 23 und der ersten Anpresswalzeneinheit 24 vorgesehen und der erste Anpressspalt 18 ist zwischen der ersten Anpresswalzeneinheit 24 und der zweiten Anpresswalzeneinheit 25 vorgesehen.

Dabei dient der erste Dosierspalt 22 zum Auftragen 130 des ersten Pulvers 21 als eine erste Schicht 26 auf die erste Anpresswalzeneinheit 24 mittels einer ersten Auftragskraft FA1 und der erste Anpressspalt 18 zum Übertragen 140 der ersten Schicht 26 von der ersten Anpresswalzeneinheit 24 auf eine erste Seite 27 des Substrats 15 mittels einer ersten Anpresskraft FP1.

Die zweite Walzeneinrichtung 28 ist der ersten Walzeneinrichtung 19 nachgelagert angeordnet. Dabei ist die erste Walzeneinrichtung 19 ausgelegt, das auf der ersten Seite 27 beschichtete Substrat 15 einem zweiten Anpressspalt 30 der zweiten Walzeneinrichtung 28 zuzuführen.

Die zweite Walzeneinrichtung 28 weist eine zweite Dosiereinheit 31 zur Aufnahme eines zweiten Pulvers 29 und zum Befüllen eines zweiten Dosierspalts 32 mit dem zweiten Pulver 29 auf. Ferner weist die zweite Walzeneinrichtung 28 eine zweite Auftragswalze 33, eine dritte Anpresswalzeneinheit 34 und eine vierte Anpresswalzeneinheit 35 auf. Dabei ist der zweite Dosierspalt 32 zwischen der zweiten Auftragswalze 33 und der dritten Anpresswalzeneinheit 34 vorgesehen. Der zweite Anpressspalt 30 wiederum ist zwischen der dritten Anpresswalzeneinheit 34 und der vierten Anpresswalzeneinheit 35 vorgesehen. Dabei ist der zweite Dosierspalt 32 zum Auftragen 130 des zweiten Pulvers 29 als eine zweite Schicht 36 auf die dritte Anpresswalzeneinheit 34 mittels einer zweiten Auftragskraft FA2 vorgesehen und der zweite Anpressspalt 30 ist zum Übertragen 140 der zweiten Schicht 36 von der dritten Anpresswalzeneinheit 34 auf die erste Schicht 26 der ersten Seite 27 des zugeführten Substrats 15 mittels einer zweiten Anpresskraft FP2 vorgesehen.

Um beidseitig eine zweilagige Pulverschicht 12 auf ein Substrat 15 auftragen zu können, weist die erste Walzeneinrichtung 19 der Beschichtungsvorrichtung 10 in Fig. 2 eine dritte Dosiereinheit 37 zur Aufnahme eines dritten Pulvers 38 und zum Befüllen eines dritten Dosierspalts 39 mit dem dritten Pulver 38 auf. Ferner ist eine dritte Auftragswalze 40 vorgesehen, wobei der dritte Dosierspalt 39 zwischen der dritten Auftragswalze 40 und der zweiten Anpresswalzeneinheit 25 vorgesehen ist. Dabei dient der dritte Dosierspalt 39 zum Auftragen 130 des dritten Pulvers 38 als dritte Schicht 41 auf die dritte Anpresswalzeneinheit 34 mittels einer dritten Auftragskraft FA3. Auch in dieser Konstellation wird der erste Anpressspalt 18 zum Übertragen 140 der dritten Schicht 41 von der zweiten Anpresswalzeneinheit 25 auf eine zweite Seite 42 des Substrats 15 mittels der ersten Anpresskraft FP1 vorgesehen.

Zusätzlich weist die zweite Walzeneinrichtung 28 eine vierte Dosiereinheit 43 zur Aufnahme eines vierten Pulvers 44 und zum Befüllen eines vierten Dosierspalts 45 mit dem vierten Pulver 44 auf. Hierfür ist eine vierte Auftragswalze 46 vorgesehen, wobei der vierte Dosierspalt 45 zwischen der vierten Auftragswalze 46 und der vierten Anpresswalzeneinheit 35 vorgesehen ist. Der vierte Dosierspalt 45 ist zum Auftragen 130 des vierten Pulvers 44 als eine vierte Schicht 47 auf die vierte Anpresswalzeneinheit 35 mittels einer vierten Auftragskraft FA4 vorgesehen.

Der zweite Anpressspalt 30 ist zum Übertragen 140 der vierten Schicht 47 von der vierten Anpresswalzeneinheit 35 auf die dritte Schicht 41 der zweiten Seite 42 des Substrats 15 mittels der zweiten Anpresskraft FP2 vorgesehen.

Des Weiteren ist bei der Beschichtungsvorrichtung 10 gemäß Fig. 2 dargestellt, dass die erste Anpresswalzeneinheit 24 der ersten Walzeneinrichtung 19 mindestens eine erste Anpresswalze 48 und mindestens eine zweite Anpresswalze 49 aufweist, wobei zwischen der mindestens einen ersten Anpresswalze 48 und der mindestens einen zweiten Anpresswalze 49 mindestens ein erster Verpressspalt 50 vorgesehen ist, und dass die zweite Anpresswalzeneinheit 25 der ersten Walzeneinrichtung 19 mindestens eine dritte Anpresswalze 51 und mindestens eine vierte Anpresswalze 52 aufweist, wobei zwischen der mindestens einen dritten Anpresswalze 51 und der mindestens einen vierten Anpresswalze 52 mindestens ein zweiter Verpressspalt 53 vorgesehen ist. Zusätzlich weist die dritte Anpresswalzeneinheit 34 der zweiten Walzeneinrichtung 28 mindestens eine fünfte Anpresswalze 54 und mindestens eine sechste Anpresswalze 55 auf, wobei zwischen der mindestens einen fünften Anpresswalze 54 und der mindestens einen sechsten Anpresswalze 55 mindestens ein dritter Verpressspalt 56 vorgesehen ist. Weiter zusätzlich weist die vierte Anpresswalzeneinheit 35 der zweiten Walzeneinrichtung 28 mindestens eine siebente Anpresswalze 57 und mindestens eine achte Anpresswalze 58 auf, wobei zwischen der mindestens einen siebenten Anpresswalze 57 und der mindestens einen achten Anpresswalze 58 mindestens ein vierter Verpressspalt 59 vorgesehen ist.

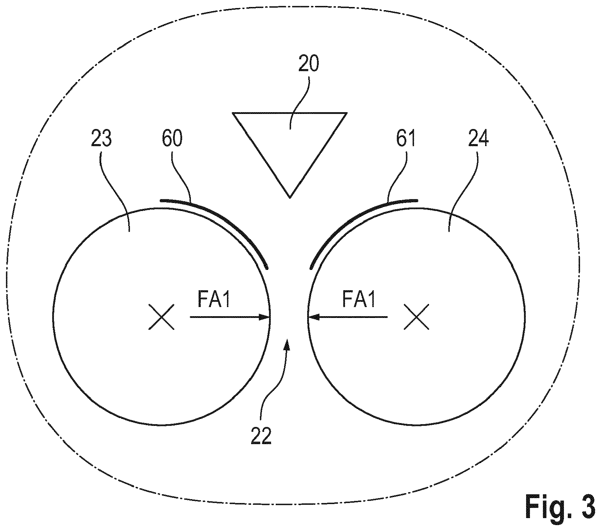

In Fig. 3 ist ein vergrößerter Ausschnitt eines ersten Dosierspalts 22 mit einer ersten Dosiereinheit 20 dargestellt, wie er sowohl in der Beschichtungsvorrichtung 10 gemäß Fig. 1 als auch Fig. 2 ausgestaltet sein kann. Dabei ist im Bereich des ersten Dosierspalts 22 ein erstes Abschirmblech 60 im Bereich der ersten Auftragswalze 23 und/oder ein zweites Abschirmblech 61 im Bereich der ersten Anpresswalzeneinheit 24 vorgesehen.

Denkbar ist hier, dass im Bereich des zweiten Dosierspalts 32 ein drittes Abschirmblech 62 im Bereich der zweiten Auftragswalze 33 vorgesehen ist und/oder dass ein viertes Abschirmblech 63 im Bereich der dritten Anpresswalzeneinheit 34 vorgesehen ist und/oder dass im Bereich des dritten Dosierspalts 39 ein fünftes Abschirmblech 64 im Bereich der dritten Auftragswalze 40 vorgesehen ist und/oder ein sechstes Abschirmblech 65 im Bereich der zweiten Anpresswalzeneinheit 25 vorgesehen ist und/oder dass im Bereich des vierten Dosierspalts 45 ein siebentes Abschirmblech 66 im Bereich der vierten Auftragswalze 46 vorgesehen ist und/oder dass ein achtes Abschirmblech 67 im Bereich der vierten Anpresswalzeneinheit 35 vorgesehen ist.

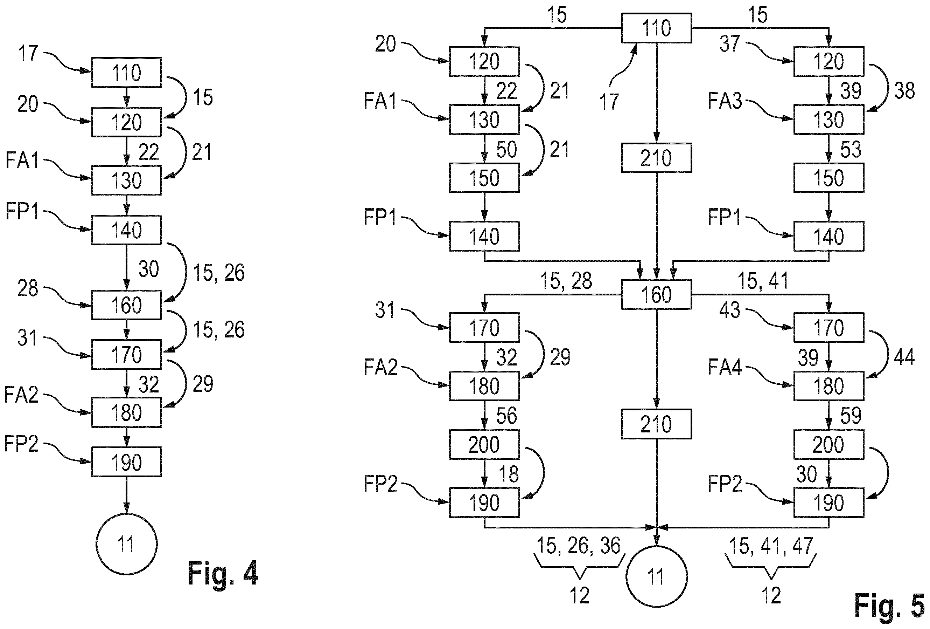

In Fig. 4 und 5 ist jeweils ein Verfahren 100 zur Herstellung einer Elektrode 11 mit zumindest einer zweilagigen Pulverschicht 12, insbesondere einer zweilagigen Kathodenschicht 13 und/oder Anodenschicht 14, auf einem Substrat 15, insbesondere einen Stromsammler 16, in einer Beschichtungsvorrichtung 10 gemäß einer der Figuren 1 oder 2 dargestellt. Die Verfahren weisen die folgenden Schritte auf:
- Zuführen 110 eines Substrats 15 mittels der Zuführeinheit 17 in den ersten Anpressspalt 18 der ersten Walzeneinrichtung 19;
- Befüllen 120 des ersten Dosierspalts 22 mit dem ersten Pulver 21 mittels der ersten Dosiereinheit 20;
- Auftragen 130 des ersten Pulvers 21 als erste Schicht 26 auf die erste Anpresswalzeneinheit 24 in dem ersten Dosierspalt 22 mittels der ersten Auftragskraft FA1;
- Übertragen 140 der ersten Schicht 26 auf die erste Seite 27 des Substrats 15 in dem ersten Anpressspalt 18 mittels der ersten Anpresskraft FP1,
- Zuführen 160 des Substrats 15 mit der übertragenen 140 ersten Schicht 26 in den zweiten Anpressspalt 30 der zweiten Walzeneinrichtung 28,
- Befüllen 170 des zweiten Dosierspalts 32 mit dem zweiten Pulver 29 mittels der zweiten Dosiereinheit 31;
- Auftragen 180 des zweiten Pulvers 29 als zweite Schicht 36 auf die dritte Anpresswalzeneinheit 34 in dem zweiten Dosierspalt 32 mittels der zweiten Auftragskraft FA2;
- Übertragen 190 der zweiten Schicht 36 auf die erste Schicht 26 der ersten Seite 27 des Substrats 15 in dem zweiten Anpressspalt 30 mittels der zweiten Anpresskraft FP2.

Die Beschichtungsvorrichtung 10 gemäß Fig. 2 weist die dritte Dosiereinheit 37 auf, sodass in dem Verfahren gemäß Fig. 5 die dritte Dosiereinheit 37 den dritten Dosierspalt 39 mit dem dritten Pulver 38 befüllt 120, wobei das dritte Pulver 38 in dem dritten Dosierspalt 39 mittels der dritten Auftragskraft FA3 als dritte Schicht 41 auf die zweite Anpresswalzeneinheit 25 aufgetragen 130 wird, und dass die dritte Schicht 41 in dem ersten Anpressspalt 18 mittels der ersten Anpresskraft FP1 auf die zweite Seite 42 des Substrats 15 übertragen 140 wird.

Ferner ist in der Beschichtungsvorrichtung 10 gemäß Fig. 2 auch eine vierte Dosiereinheit 43 vorgesehen, sodass in dem Verfahren gemäß Fig. 5 die vierte Dosiereinheit 43 den vierten Dosierspalt 45 mit dem vierten Pulver 44 befüllt 170, wobei das vierte Pulver 44 in dem vierten Dosierspalt 45 mittels der vierten Auftragskraft FA4 als vierte Schicht 47 auf die vierte Anpresswalzeneinheit 35 aufgetragen 180 wird, und dass die vierte Schicht 47 in dem zweiten Anpressspalt 30 mittels der zweiten Anpresskraft FP2 auf die dritte Schicht 41 der zweiten Seite 42 des Substrats 15 übertragen 140 wird.

Für ein gutes Ergebnis des Schichtauftrags auf das Substrat 15 ist die Beschichtungsvorrichtung 10 und das Verfahren 100 so ausgelegt, dass die erste Dosiereinheit 20 den ersten Dosierspalt 22 kontinuierlich befüllt 120 und dass die zweite Dosiereinheit 31 den zweiten Dosierspalt 32 kontinuierlich befüllt 170 und dass die dritte Dosiereinheit 37 den dritten Dosierspalt 39 kontinuierlich befüllt 120 und dass die vierte Dosiereinheit 43 den vierten Dosierspalt 45 kontinuierlich befüllt 170.

In dem Verfahren 100 gemäß Fig. 5 wird die erste Schicht 26 in dem mindestens einen ersten Verpressspalt 50 der ersten Anpresswalzeneinheit 24 der ersten Walzeneinrichtung 19 verpresst 150 und die dritte Schicht 41 wird in dem mindestens einen zweiten Verpressspalt 53 der zweiten Anpresswalzeneinheit 25 der ersten Walzeneinrichtung 19 verpresst 150. Zusätzlich wird die zweite Schicht 36 in dem mindestens einen dritten Verpressspalt 56 der dritten Anpresswalzeneinheit 34 der zweiten Walzeneinrichtung 28 verpresst 200 und die vierte Schicht 47 wird in dem mindestens einen vierten Verpressspalt 59 der vierten Anpresswalzeneinheit 35 der zweiten Walzeneinrichtung 28 verpresst 200.

Für ein besseres Auftragen 130 der Schichten und Übertragen 140 der Schichten werden die erste Auftragswalze 23 und die zweite Auftragswalze 33 , wie sie in der Fig. 1 und 2 dargestellt sind, und die dritte Auftragswalze 40 und die vierte Auftragswalze 46 , wie in Fig. 2 dargestellt, sowie die erste Anpresswalzeneinheit 24 und die zweite Anpresswalzeneinheit 25 und die dritte Anpresswalzeneinheit 34 und die vierte Anpresswalzeneinheit 35 der Fig. 1 und Fig. 2 , wie in Fig. 4 und 5 dargestellt, auf eine Temperatur zwischen 80°C bis 150°C temperiert 210.

Bei der Ausführung des Verfahrens 100 gemäß Fig. 4 mit der Beschichtungsvorrichtung 10 gemäß Fig. 1 bzw. bei dem Verfahren 100 gemäß Fig. 5 mit der Beschichtungsvorrichtung 10 gemäß Fig. 2 rotieren die erste Anpresswalzeneinheit 24 und die zweite Anpresswalzeneinheit 25 der ersten Walzeneinrichtung 19 mit der gleichen ersten Rotationsgeschwindigkeitv1 gegeneinander, wobei das Verhältnis der ersten Rotationsgeschwindigkeitv1 der ersten Anpresswalzeneinheit 24 zu der zweiten Rotationsgeschwindigkeit v2 ersten Auftragswalze 23 10:1 bis 10:4 ist. Gleichzeitig rotieren die dritte Anpresswalzeneinheit 34 und die vierte Anpresswalzeneinheit 35 der zweiten Walzeneinrichtung 28 mit der gleichen dritten Rotationsgeschwindigkeitv3 gegeneinander, wobei das Verhältnis der dritten Rotationsgeschwindigkeit v3 der dritten Anpresswalzeneinheit 34 zu der vierten Rotationsgeschwindigkeit v4 der zweiten Auftragswalze 33 10:1 bis 10:4 ist.

In dem Verfahren 100 gemäß Fig. 5 ist das Verhältnis der ersten Rotationsgeschwindigkeitv1 der zweiten Anpresswalzeneinheit 25 zu der fünften Rotationsgeschwindigkeit v5 der dritten Auftragswalze 40 10:1 bis 10:4 und das Verhältnis der dritten Rotationsgeschwindigkeit v3 der vierten Anpresswalzeneinheit 35 zu der sechsten Rotationsgeschwindigkeit v6 der vierten Auftragswalze 46 10:1 bis 10:4

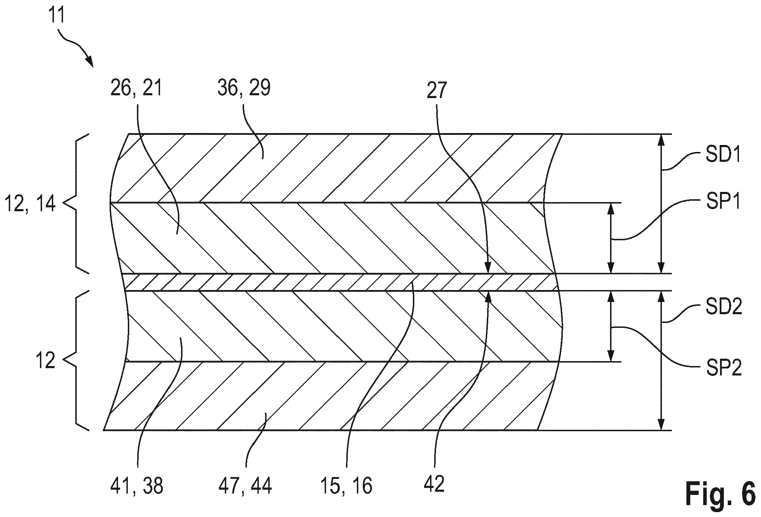

In Fig. 6 ist eine Elektrode 11 mit einer zweilagigen Pulverschicht 12 hergestellt mit einer Beschichtungsvorrichtung 10 gemäß einer der Fig. 1 oder Fig. 2 und/oder einem Verfahren 100 gemäß einer der Verfahren gemäß Fig. 3 oder Fig. 4 dargestellt. Dabei ist das Substrat 15 ein Stromsammler 16 mit einer ersten Seite 27 und einer zweiten Seite 42, wobei die erste Schicht 26 der zweilagigen Pulverschicht 12 aus dem ersten Pulver 21 und die zweite Schicht 36 der zweilagigen Pulverschicht 12 aus dem zweiten Pulver 29 ist.

Zusätzlich ist die dritte Schicht 41 der zweilagigen Pulverschicht 12 aus dem dritten Pulver 38 und die vierte Schicht 47 der zweilagigen Pulverschicht 12 aus dem vierten Pulver 44.

Dabei weist die zweilagige Pulverschicht 12 auf der ersten Seite 27 des Substrats 15 eine erste Schichtdicke SD1 und respektive die zweilagige Pulverschicht 12 auf der zweiten Seite 42 des Substrats 15 eine zweite Schichtdicke SD2 zwischen 40 bis 150 µm aufweisen, wobei das erste Pulver 21 der ersten Schicht 26 eine erste Schichtdicke SP1 von 10 bis 70 µm und das dritte Pulver 38 der dritten Schicht 41 eine zweite Schichtdicke SP2 von 10 bis 70 µm aufweisen. Dadurch kann der Materialeinsatz auch kosteneffizient gestaltet werden.

### Bezugszeichenliste

- 10: Beschichtungsvorrichtung
- 11: Elektrode
- 12: zweilagige Pulverschicht
- 13: Kathodenschicht
- 14: Anodenschicht
- 15: Substrat
- 16: Stromsammler
- 17: Zuführeinheit
- 18: erster Anpressspalt
- 19: erste Walzeneinrichtung
- 20: erste Dosiereinheit
- 21: erstes Pulver
- 22: erster Dosierspalt
- 23: erste Auftragswalze
- 24: erste Anpresswalzeneinheit
- 25: zweite Anpresswalzeneinheit
- 26: erste Schicht
- 27: erste Seite
- 28: zweite Walzeneinrichtung
- 29: zweites Pulver
- 30: zweiter Anpressspalt
- 31: zweite Dosiereinheit
- 32: zweiter Dosierspalt
- 33: zweite Auftragswalze
- 34: dritte Anpresswalzeneinheit
- 35: vierte Anpresswalzeneinheit
- 36: zweite Schicht
- 37: dritte Dosiereinheit
- 38: drittes Pulver
- 39: dritter Dosierspalt
- 40: dritte Auftragswalze
- 41: dritte Schicht
- 42: zweite Seite
- 43: vierte Dosiereinheit
- 44: viertes Pulver
- 45: vierter Dosierspalt
- 46: vierte Auftragswalze
- 47: vierte Schicht
- 48: erste Anpresswalze
- 49: zweite Anpresswalze
- 50: erster Verpressspalt
- 51: dritte Anpresswalze
- 52: vierte Anpresswalze
- 53: zweiter Verpressspalt
- 54: fünfte Anpresswalze
- 55: sechste Anpresswalze
- 56: dritter Verpressspalt
- 57: siebente Anpresswalze
- 58: achte Anpresswalze
- 59: vierter Verpressspalt
- 60: erstes Abschirmblech
- 61: zweites Abschirmblech
- 62: drittes Abschirmblech
- 63: viertes Abschirmblech
- 64: fünftes Abschirmblech
- 65: sechstes Abschirmblech
- 66: siebentes Abschirmblech
- 67: achtes Abschirmblech

- 100: Verfahren Erzeugen der ersten und der dritten Schicht:
- 110: Zuführen
- 120: Paralleles Befüllen
- 130: Auftragen
- 140: Übertragen
- 150: Verpressen Erzeugen der zweiten und der vierten Schicht:
- 160: Zuführen
- 170: Paralleles Befüllen
- 180: Auftragen
- 190: Übertragen
- 200: Verpressen
- 210: Temperieren

- FA1: erste Auftragskraft
- FA2: zweite Auftragskraft
- FA3: dritte Auftragskraft
- FA4: vierte Auftragskraft
- FP1: erste Anpresskraft
- FP2: zweite Anpresskraft

- SD1: erste Schichtdicke der ersten zweilagigen Pulverschicht
- SD2: zweite Schichtdicke der zweiten zweilagigen Pulverschicht
- SP1: erste Schichtdicke des ersten Pulvers der ersten zweilagigen Pulverschicht
- SP2: zweite Schichtdicke des dritten Pulvers der zweiten zweilagigen Pulverschicht

- v1: erste Rotationsgeschwindigkeit
- v2: zweite Rotationsgeschwindigkeit
- v3: dritte Rotationsgeschwindigkeit
- v4: vierte Rotationsgeschwindigkeit
- v5: fünfte Rotationsgeschwindigkeit
- v6: sechste Rotationsgeschwindigkeit

## Patentansprüche

1. Beschichtungsvorrichtung (10) zur Herstellung einer Elektrode (11) mit zumindest einer zweilagigen Pulverschicht (12), insbesondere einer zweilagigen Kathodenschicht (13) und/oder Anodenschicht (14), auf einem Substrat (15), insbesondere einen Stromsammler (16),
mit einer Zuführeinheit (17) zum Zuführen (110) eines Substrats (15) in einen ersten Anpressspalt (18),
mit einer ersten Walzeneinrichtung (19) zum Übertragen (140) eines ersten Pulvers (21) als eine erste Schicht (26) auf eine erste Seite (27) des Substrats (15),
wobei die erste Walzeneinrichtung (19) eine erste Dosiereinheit (20) zur Aufnahme eines ersten Pulvers (21) und zum Befüllen eines ersten Dosierspalts (22) mit dem ersten Pulver (21) aufweist, und
wobei die erste Walzeneinrichtung (19) eine erste Auftragswalze (23), eine erste Anpresswalzeneinheit (24) und eine zweite Anpresswalzeneinheit (25) aufweist,
wobei der erste Dosierspalt (22) zwischen der ersten Auftragswalze (23) und der ersten Anpresswalzeneinheit (24) vorgesehen ist und wobei der erste Anpressspalt (18) zwischen der ersten Anpresswalzeneinheit (24) und der zweiten Anpresswalzeneinheit (25) vorgesehen ist,
wobei der erste Dosierspalt (22) zum Auftragen (130) des ersten Pulvers (21) als eine erste Schicht (26) auf die erste Anpresswalzeneinheit (24) mittels einer ersten Auftragskraft (FA1) vorgesehen ist, und
wobei der erste Anpressspalt (18) zum Übertragen (140) der ersten Schicht (26) von der ersten Anpresswalzeneinheit (24) auf eine erste Seite (27) des Substrats (15) mittels einer ersten Anpresskraft (FP1) vorgesehen ist,
mit einer zweiten Walzeneinrichtung (28) zum Übertragen (140) eines zweiten Pulvers (29) auf die erste Schicht (26) auf der ersten Seite (27) des Substrats (15),
wobei die zweite Walzeneinrichtung (28) der ersten Walzeneinrichtung (19) nachgelagert angeordnet ist, und wobei die erste Walzeneinrichtung (19) ausgelegt ist, das auf der ersten Seite (27) beschichtete Substrat (15) einem zweiten Anpressspalt (30) der zweiten Walzeneinrichtung (28) zuzuführen,
wobei die zweite Walzeneinrichtung (28) eine zweite Dosiereinheit (31) zur Aufnahme eines zweiten Pulvers (29) und zum Befüllen eines zweiten Dosierspalts (32) mit dem zweiten Pulver (29) aufweist,
wobei die zweite Walzeneinrichtung (28) eine zweite Auftragswalze (33), eine dritte Anpresswalzeneinheit (34) und eine vierte Anpresswalzeneinheit (35) aufweist,
wobei der zweite Dosierspalt (32) zwischen der zweiten Auftragswalze (33) und der dritten Anpresswalzeneinheit (34) vorgesehen ist, und
wobei der zweite Anpressspalt (30) zwischen der dritten Anpresswalzeneinheit (34) und der vierten Anpresswalzeneinheit (35) vorgesehen ist,
wobei der zweite Dosierspalt (32) zum Auftragen (130) des zweiten Pulvers (29) als eine zweite Schicht (36) auf die dritte Anpresswalzeneinheit (34) mittels einer zweiten Auftragskraft (FA2) vorgesehen ist und
wobei der zweite Anpressspalt (30) zum Übertragen (140) der zweiten Schicht (36) von der dritten Anpresswalzeneinheit (34) auf die erste Schicht (26) der ersten Seite (27) des zugeführten Substrats (15) mittels einer zweiten Anpresskraft (FP2) vorgesehen ist.

2. Beschichtungsvorrichtung (10) nach Anspruch 1,
**dadurch gekennzeichnet,**
**dass** die erste Walzeneinrichtung (19) eine dritte Dosiereinheit (37) zur Aufnahme eines dritten Pulvers (38) und zum Befüllen eines dritten Dosierspalts (39) mit dem dritten Pulver (38) aufweist, und dass die erste Walzeneinrichtung (19) eine dritte Auftragswalze (40) aufweist, wobei der dritte Dosierspalt (39) zwischen der dritten Auftragswalze (40) und der zweiten Anpresswalzeneinheit (25) vorgesehen ist, wobei der dritte Dosierspalt (39) zum Auftragen (130) des dritten Pulvers (38) als dritte Schicht (41) auf die dritte Anpresswalzeneinheit (34) mittels einer dritten Auftragskraft (FA3) vorgesehen ist und wobei der erste Anpressspalt (18) zum Übertragen (140) der dritten Schicht (41) von der zweiten Anpresswalzeneinheit (25) auf eine zweite Seite (42) des Substrats (15) mittels der ersten Anpresskraft (FP1) vorgesehen ist.

3. Beschichtungsvorrichtung (10) nach Anspruch 1 oder 2,
**dadurch gekennzeichnet,**
**dass** die zweite Walzeneinrichtung (28) eine vierte Dosiereinheit (43) zur Aufnahme eines vierten Pulvers (44) und zum Befüllen eines vierten Dosierspalts (45) mit dem vierten Pulver (44) aufweist, und dass die zweite Walzeneinrichtung (28) eine vierte Auftragswalze (46) aufweist, wobei der vierte Dosierspalt (45) zwischen der vierten Auftragswalze (46) und der vierten Anpresswalzeneinheit (35) vorgesehen ist, wobei der vierte Dosierspalt (45) zum Auftragen (130) des vierten Pulvers (44) als eine vierte Schicht (47) auf die vierte Anpresswalzeneinheit (35) mittels einer vierten Auftragskraft (FA4) vorgesehen ist, und wobei der zweite Anpressspalt (30) zum Übertragen (140) der vierten Schicht (47) von der vierten Anpresswalzeneinheit (35) auf die dritte Schicht (41) der zweiten Seite (42) des Substrats (15) mittels der zweiten Anpresskraft (FP2) vorgesehen ist.

4. Beschichtungsvorrichtung (10) nach einem der vorhergehenden Ansprüche,
**dadurch gekennzeichnet,**
**dass** die erste Anpresswalzeneinheit (24) der ersten Walzeneinrichtung (19) mindestens eine erste Anpresswalze (48) und mindestens eine zweite Anpresswalze (49) aufweist, wobei zwischen der mindestens einen ersten Anpresswalze (48) und der mindestens einen zweiten Anpresswalze (49) mindestens ein erster Verpressspalt (50) vorgesehen ist, und/oder
**dass** die zweite Anpresswalzeneinheit (25) der ersten Walzeneinrichtung (19) mindestens eine dritte Anpresswalze (51) und mindestens eine vierte Anpresswalze (52) aufweist, wobei zwischen der mindestens einen dritten Anpresswalze (51) und der mindestens einen vierten Anpresswalze (52) mindestens ein zweiter Verpressspalt (53) vorgesehen ist und/oder
**dass** die dritte Anpresswalzeneinheit (34) der zweiten Walzeneinrichtung (28) mindestens eine fünfte Anpresswalze (54) und mindestens eine sechste Anpresswalze (55) aufweist, wobei zwischen der mindestens einen fünften Anpresswalze (54) und der mindestens einen sechsten Anpresswalze (55) mindestens ein dritter Verpressspalt (56) vorgesehen ist und/oder dass die vierte Anpresswalzeneinheit (35) der zweiten Walzeneinrichtung (28) mindestens eine siebente Anpresswalze (57) und mindestens eine achte Anpresswalze (58) aufweist, wobei zwischen der mindestens einen siebenten Anpresswalze (57) und der mindestens einen achten Anpresswalze (58) mindestens ein vierter Verpressspalt (59) vorgesehen ist.

5. Beschichtungsvorrichtung (10) nach einem der vorhergehenden Ansprüche,
**dadurch gekennzeichnet,**
**dass** im Bereich des ersten Dosierspalts (22) ein erstes Abschirmblech (60) im Bereich der ersten Auftragswalze (23) vorgesehen ist und/oder ein zweites Abschirmblech (61) im Bereich der ersten Anpresswalzeneinheit (24) vorgesehen ist und/oder
**dass** im Bereich des zweiten Dosierspalts (32) ein drittes Abschirmblech (62) im Bereich der zweiten Auftragswalze (33) vorgesehen ist und/oder ein viertes Abschirmblech (63) im Bereich der dritten Anpresswalzeneinheit (34) vorgesehen ist und/oder
**dass** im Bereich des dritten Dosierspalts (39) ein fünftes Abschirmblech (64) im Bereich der dritten Auftragswalze (40) vorgesehen ist und/oder ein sechstes Abschirmblech (65) im Bereich der zweiten Anpresswalzeneinheit (25) vorgesehen ist und/oder dass im Bereich des vierten Dosierspalts (45) ein siebentes Abschirmblech (66) im Bereich der vierten Auftragswalze (46) vorgesehen ist und/oder dass ein achtes Abschirmblech (67) im Bereich der vierten Anpresswalzeneinheit (35) vorgesehen ist.

6. Verfahren (100) zur Herstellung einer Elektrode (11) mit zumindest einer zweilagigen Pulverschicht (12), insbesondere einer zweilagigen Kathodenschicht (13) und/oder Anodenschicht (14), auf einem Substrat (15), insbesondere einen Stromsammler (16), in einer Beschichtungsvorrichtung (10) gemäß einem der vorhergehenden Ansprüche, aufweisend die folgenden Schritte:
- Zuführen (110) eines Substrats (15) mittels der Zuführeinheit (17) in den ersten Anpressspalt (18) der ersten Walzeneinrichtung (19);
- Befüllen (120) des ersten Dosierspalts (22) mit dem ersten Pulver (21) mittels der ersten Dosiereinheit (20);
- Auftragen (130) des ersten Pulvers (21) als erste Schicht (26) auf die erste Anpresswalzeneinheit (24) in dem ersten Dosierspalt (22) mittels der ersten Auftragskraft (FA1);
- Übertragen (140) der ersten Schicht (26) auf die erste Seite (27) des Substrats (15) in dem ersten Anpressspalt (18) mittels der ersten Anpresskraft (FP1),
- Zuführen (160) des Substrats (15) mit der übertragenen (140) ersten Schicht (26) in den zweiten Anpressspalt (30) der zweiten Walzeneinrichtung (28),
- Befüllen (170) des zweiten Dosierspalts (32) mit dem zweiten Pulver (29) mittels der zweiten Dosiereinheit (31);
- Auftragen (180) des zweiten Pulvers (29) als zweite Schicht (36) auf die dritte Anpresswalzeneinheit (34) in dem zweiten Dosierspalt (32) mittels der zweiten Auftragskraft (FA2);
- Übertragen (190) der zweiten Schicht (36) auf die erste Schicht (26) der ersten Seite (27) des Substrats (15) in dem zweiten Anpressspalt (30) mittels der zweiten Anpresskraft (FP2).

7. Verfahren (100) nach Anspruch 6,
**dadurch gekennzeichnet,**
**dass** die dritte Dosiereinheit (37) den dritten Dosierspalt (39) mit dem dritten Pulver (38) befüllt (120), wobei das dritte Pulver (38) in dem dritten Dosierspalt (39) mittels der dritten Auftragskraft (FA3) als dritte Schicht (41) auf die zweite Anpresswalzeneinheit (25) aufgetragen (130) wird, und dass die dritte Schicht (41) in dem ersten Anpressspalt (18) mittels der ersten Anpresskraft (FP1) auf die zweite Seite (42) des Substrats (15) übertragen (140) wird.

8. Verfahren (100) nach Anspruch 6 oder 7,
**dadurch gekennzeichnet,**
**dass** die vierte Dosiereinheit (43) den vierten Dosierspalt (45) mit dem vierten Pulver (44) befüllt (170), wobei das vierte Pulver (44) in dem vierten Dosierspalt (45) mittels der vierten Auftragskraft (FA4) als vierte Schicht (47) auf die vierte Anpresswalzeneinheit (35) aufgetragen (180) wird, und dass die vierte Schicht (47) in dem zweiten Anpressspalt (30) mittels der zweiten Anpresskraft (FP2) auf die dritte Schicht (41) der zweiten Seite (42) des Substrats (15) übertragen (140) wird.

9. Verfahren (100) nach einem der Ansprüche 6 bis 8,
**dadurch gekennzeichnet,**
**dass** die erste Dosiereinheit (20) den ersten Dosierspalt (22) kontinuierlich befüllt (120) und/oder dass die zweite Dosiereinheit (31) den zweiten Dosierspalt (32) kontinuierlich befüllt (170) und/oder dass die dritte Dosiereinheit (37) den dritten Dosierspalt (39) kontinuierlich befüllt (120) und/oder dass die vierte Dosiereinheit (43) den vierten Dosierspalt (45) kontinuierlich befüllt (170).

10. Verfahren (100) nach einem der Ansprüche 6 bis 9,
**dadurch gekennzeichnet,**
**dass** die erste Schicht (26) in dem mindestens einen ersten Verpressspalt (50) der ersten Anpresswalzeneinheit (24) der ersten Walzeneinrichtung (19) verpresst (150) wird und/oder
**dass** die dritte Schicht (41) in dem mindestens einen zweiten Verpressspalt (53) der zweiten Anpresswalzeneinheit (25) der ersten Walzeneinrichtung (19) verpresst (150) wird und/oder
**dass** die zweite Schicht (36) in dem mindestens einen dritten Verpressspalt (56) der dritten Anpresswalzeneinheit (34) der zweiten Walzeneinrichtung (28) verpresst (200) wird und/oder
**dass** die vierte Schicht (47) in dem mindestens einen vierten Verpressspalt (59) der vierten Anpresswalzeneinheit (35) der zweiten Walzeneinrichtung (28) verpresst (200) wird.

11. Verfahren (100) nach einem der Ansprüche 6 bis 10,
**dadurch gekennzeichnet,**
**dass** die erste Auftragswalze (23) und/oder die zweite Auftragswalze (33) und/oder dritte Auftragswalze (40) und/oder die vierte Auftragswalze (46) und/oder die erste Anpresswalzeneinheit (24) und/oder die zweite Anpresswalzeneinheit (25) und/oder die dritte Anpresswalzeneinheit (34) und/oder die vierte Anpresswalzeneinheit (35) auf eine Temperatur zwischen80°C bis 150°C temperiert (210) werden.

12. Verfahren (100) nach einem der Ansprüche 6 bis 11,
**dadurch gekennzeichnet,**
**dass** die erste Anpresswalzeneinheit (24) und die zweite Anpresswalzeneinheit (25) der ersten Walzeneinrichtung (19) mit der gleichen ersten Rotationsgeschwindigkeit (v1) gegeneinander rotieren, wobei das Verhältnis der ersten Rotationsgeschwindigkeit (v1) der ersten Anpresswalzeneinheit (24) zu der zweiten Rotationsgeschwindigkeit (v2) der ersten Auftragswalze (23) 10:1 bis 10:4, vorzugsweise 10:1,5 bis 10:3, weiter vorzugsweise 10:2 bis 10:3,ist und/oder das Verhältnis der ersten Rotationsgeschwindigkeit (v1) der zweiten Anpresswalzeneinheit (25) zu der fünften Rotationsgeschwindigkeit (v5) dritten Auftragswalze (40) 10:1 bis 10:4, vorzugsweise 10:1,5 bis 10:3, weiter vorzugsweise 10:2 bis 10:3,ist und/oder,
**dass** die dritte Anpresswalzeneinheit (34) und die vierte Anpresswalzeneinheit (35) der zweiten Walzeneinrichtung (28) mit der gleichen dritten Rotationsgeschwindigkeit (v3) gegeneinander rotieren, wobei das Verhältnis der dritten Rotationsgeschwindigkeit (v3) der dritten Anpresswalzeneinheit (34) zu der vierten Rotationsgeschwindigkeit (v4) zweiten Auftragswalze (33) 10:1 bis 10:4, vorzugsweise 10:1,5 bis 10:3, weiter vorzugsweise 10:2 bis 10:3,st und/oder das Verhältnis der dritten Rotationsgeschwindigkeit (v3) der vierten Anpresswalzeneinheit (35) zu der sechsten Rotationsgeschwindigkeit (v6) der vierten Auftragswalze (46) 10:1 bis 10:4, vorzugsweise 10:1,5 bis 10:3, weiter vorzugsweise 10:2 bis 10:3,ist.

13. Elektrode (11) mit einer zweilagigen Pulverschicht (12) hergestellt mit einer Beschichtungsvorrichtung (10) gemäß den Ansprüchen 1 bis 5 und/oder einem Verfahren (100) gemäß den Ansprüchen 6 bis 12, wobei das Substrat (15) ein Stromsammler (16) mit einer ersten Seite (27) und einer zweiten Seite (42) ist, wobei die erste Schicht (26) der zweilagigen Pulverschicht (12) aus dem ersten Pulver (21) und die zweite Schicht (36) der zweilagigen Pulverschicht (12) aus dem zweiten Pulver (29) ist.

14. Elektrode (11) nach Anspruch 13,
**dadurch gekennzeichnet,**
**dass** die dritte Schicht (41) der zweilagigen Pulverschicht (12) aus dem dritten Pulver (38) und die vierte Schicht (47) der zweilagigen Pulverschicht (12) aus dem vierten Pulver (44) ist.
